# EUROPÄISCHE PATENTSCHRIFT

(11) **EP 1 609 970 B1**
(45) Veröffentlichungstag und Bekanntmachung des Hinweises auf die Patenterteilung: **22.04.2009**
(21) Anmeldenummer: 05103825.5
(22) Anmeldetag: 09.05.2005
(51) Int. Cl.: F02D 23/02, F02D 41/22, F02B 37/16

(54) **Verfahren und Vorrichtung zum Betreiben einer Brennkraftmaschine**
Method and device to operate an internal combustion engine
Méthode et dispositif pour le fonctionnement d'un moteur à combustion interne

(30) Priorität: 25.06.2004 DE 102004030763
(43) Veröffentlichungstag der Anmeldung: 28.12.2005
(73) Patentinhaber: ROBERT BOSCH GMBH, 70442 Stuttgart (DE)
(72) Erfinder: Wild, Ernst, 71739, Oberriexingen (DE); Nau, Michael, 72175, Dornhan/Aischfeld (DE)

(56) Entgegenhaltungen:
- WO-A-02/38963
- DE-A1- 10 111 271
- DE-A1- 10 225 307
- DE-A1- 19 712 850
- US-A- 3 029 633
- US-A- 4 512 153

## Beschreibung

### Stand der Technik

Die Erfindung geht von einem Verfahren und von einer Vorrichtung zum Betreiben einer Brennkraftmaschine nach der Gattung der unabhängigen Ansprüche aus.

Es sind Brennkraftmaschinen mit Abgasturbolader bekannt, bei denen beim Schließen der Drosselklappe in der Luftzufuhr ein Bypassventil um den Verdichter des Abgasturboladers, das sogenannte Schubumluftventil, geöffnet wird. Dadurch wird verhindert, dass bei kleinem Luftdurchsatz und hoher Verdichtung der Verdichter in den Pumpbetrieb kommt. Beim Pumpbetrieb reist die Strömung an den Leitschaufeln der Turbine des Abgasturboladers ab und der Ladedruck bricht zusammen, um sich dann anschließend erneut aufzubauen. Dieser Vorgang wiederholt sich. Die dabei auftretenden Achsbelastungen und Geräusche werden durch das Öffnen des Schubumluftventils vermieden, weil dann ein hoher Luftstrom im Kreis fließt. Wenn zu dem Zeitpunkt, zu dem das Schubumluftventil öffnen soll, ein pulsierender Luftmassenstrom von einem Luftmassenmesser in der Luftzufuhr der Brennkraftmaschine gemessen wird, dann wird ein Fehler des Schubumluftventils erkannt, d. h. das Schubumluftventil öffnet fehlerhafter Weise nicht.

Die DE 101 11 271 A1 offenbart ein Verfahren und eine Vorrichtung zur Diagnose eines Schubumluftventils eines Laders, bei dem eine Fehlfunktion eines Ventils erkannt wird, wenn nach einer negativen Laständerung Pulsationen in einem die Füllung der Brennkraftmaschine repräsentierenden Signal oder einem daraus abgeleiteten Signal erkannt werden.

### Vorteile der Erfindung

Das erfindungsgemäße Verfahren und die erfindungsgemäße Vorrichtung zum Betreiben einer Brennkraftmaschine mit den Merkmalen der unabhängigen Ansprüche haben demgegenüber den Vorteil, dass eine Druckdifferenz über einer Komponente einer Luftzufuhr zur Brennkraftmaschine ermittelt wird und das bei Detektion eines pulsierenden Druckdifferenz ein Fehler erkannt wird. Auf diese Weise lässt sich ein unerwünschtes Pumpen in der Luftzufuhr der Brennkraftmaschine auch ohne Ermittlung des Luftmassenstroms und damit insbesondere ohne Luftmassenmesser erkennen.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, wenn die der Brennkraftmaschine über die Luftzufuhr zugeführte Luft von einem Verdichter verdichtet wird, wobei ein Bypassventil in einem Bypasskanal zum Verdichter zur Vermeidung von Verdichterpumpen angesteuert wird, und dass wenn zu einem Zeitpunkt, zu dem das Bypassventil öffnen soll, eine pulsierende Druckdifferenz über der Komponente detektiert wird, ein Fehler des Bypassventils detektiert wird. Auf diese Weise kann ein unerwünschtes Verdichterpumpen aufgrund eines Fehlers des Bypassventils und damit der Fehler des Bypassventils besonders einfach und ohne Ermittlung des Luftmassenstroms zur Brennkraftmaschine, insbesondere ohne Verwendung eines Luftmassenmessers in der Luftzufuhr, erkannt werden.

Besonders einfach lässt sich das unerwünschte Pumpen in der Luftzufuhr der Brennkraftmaschine erkennen, wenn die Druckdifferenz über der Komponente der Luftzufuhr mit einem oberen und einem unteren Schwellwert verglichen wird und dann, wenn die Anzahl der Überschreitungen des oberen und des unteren Schwellwertes innerhalb einer vorgegebenen Zeit jeweils einen vorgegebenen Wert überschreitet, der Fehler erkannt wird.

Für eine zuverlässige Fehlererkennung im Hinblick auf ein unerwünschtes Verdichterpumpen kann es in vorteilhafter Weise vorgesehen sein, dass mit Beginn der öffnenden Ansteuerung des Bypassventils Zähler zurückgesetzt werden, die die Anzahl der Überschreitungen des oberen und des unteren Schwellwertes zählen, und ein Zeitglied zur Einstellung der vorgegebenen Zeit gestartet wird.

### Zeichnung

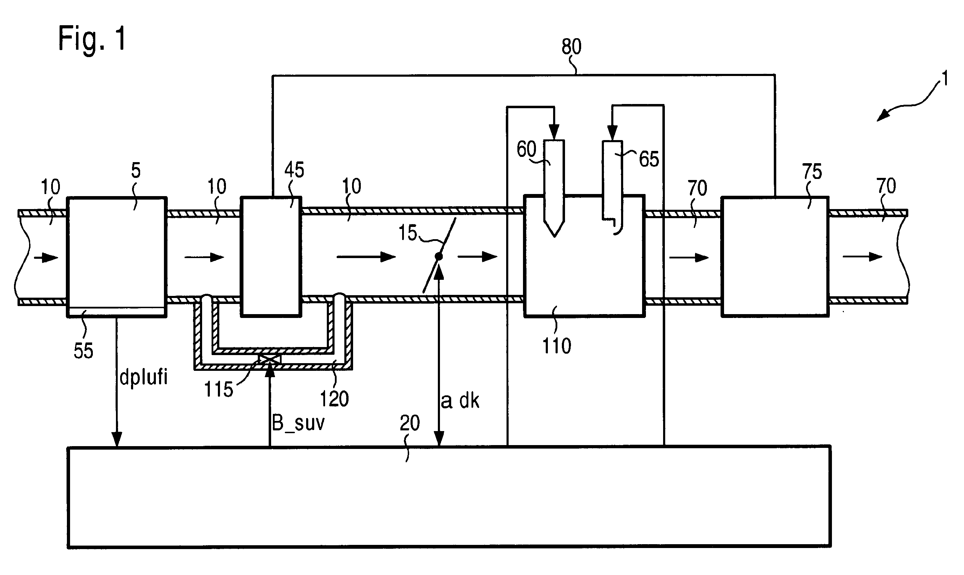

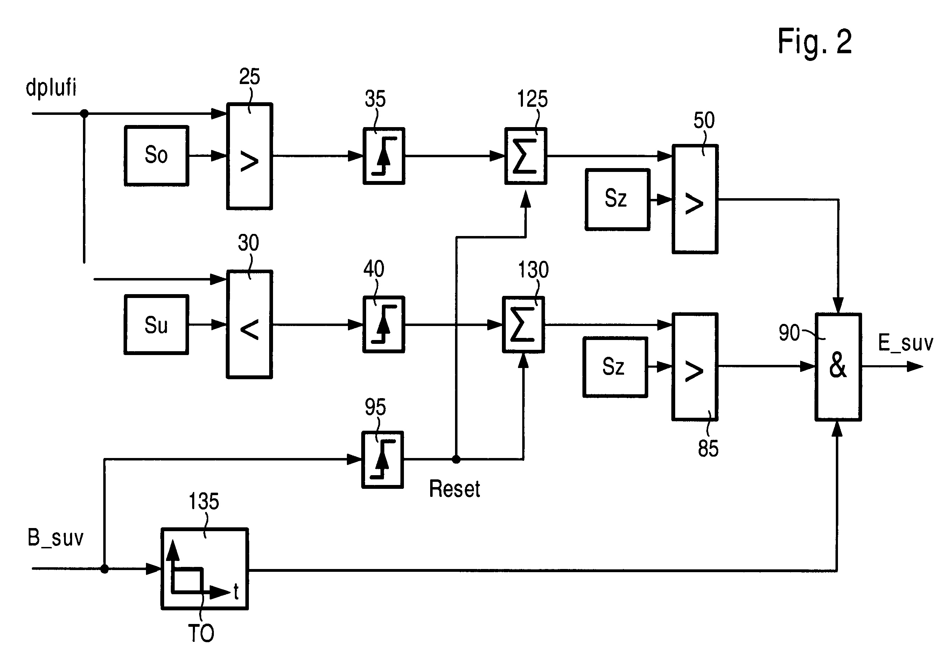

Ein Ausführungsbeispiel der Erfindung ist in der Zeichnung dargestellt und in der nachfolgenden Beschreibung näher erläutert. Es zeigen Figur 1 eine schematische Ansicht einer Brennkraftmaschine und Figur 2 ein Funktionsdiagramm zur Erläuterung des erfindungsgemäßen Verfahrens und der erfindungsgemäßen Vorrichtung.

### Beschreibung des Ausführungsbeispiels

In Figur 1 kennzeichnet 1 eine Brennkraftmaschine, die beispielsweise als Ottomotor oder als Dieselmotor ausgebildet sein kann. Beim Dieselmotor wird jedoch im allgemeinen nicht so stark gedrosselt, dass Pumpen auftritt. Im Folgenden soll deshalb beispielhaft angenommen werden, das die Brennkraftmaschine 1 als Ottomotor ausgebildet ist. Der Ottomotor 1 umfasst einen Zylinderblock 110 mit einem oder mehreren Zylindern, die jeweils einen Brennraum umfassen. Stellvertretend ist in Figur 1 der Brennraum eines Zylinders des Zylinderblocks 110 schematisch dargestellt. Diesem Brennraum wird über ein in Figur 1 nicht dargestelltes Einlassventil Frischluft von einem Luftzufuhrkanal 10, der im Folgenden auch als Luftzufuhr bezeichnet wird, zugeführt. Die Strömungsrichtung der Frischluft in der Luftzufuhr 10 ist dabei in Figur 1 durch Pfeile gekennzeichnet. Dabei wird die Frischluft zunächst von einem Luftfilter 5 in der Luftzufuhr 10 von dem in der Ansaugluft enthaltenen Staub gereinigt. Ein Differenzdrucksensor 55 ermittelt die Druckdifferenz, die zwischen Lufteintritt und Luftaustritt des Luftfilters 5 in der Luftzufuhr 10 sich einstellt und leitet das Messergebnis an eine Motorsteuerung 20 weiter. Solche Differenzdrucksensoren sind dem Fachmann bereits hinlänglich bekannt. Stromabwärts des Luftfilters 5 ist in der Luftzufuhr 10 ein Verdichter 45 angeordnet, der die dem Ottomotor 1 zugeführte Frischluft möglichst auf einen vorgegebenen Sollladedruck verdichtet. Stromabwärts des Verdichters 45 ist in der Luftzufuhr 10 ein leistungsstellendes Element oder Stellglied 15, in diesem Beispiel als Drosselklappe ausgebildet, angeordnet. Die Drosselklappe 15 wiederum wird von der Motorsteuerung 20 angesteuert. Dabei soll im Folgenden beispielhaft angenommen werden, dass der Ottomotor 1 ein Fahrzeug antreibt, wobei ein Fahrer an einem in Figur 1 nicht dargestellten Fahrpedal einen Fahrerwunsch vorgeben kann, der von der Motorsteuerung 20 in einen Vorgabewert für den Öffnungsgrad der Drosselklappe 15 umgesetzt wird. Die Motorsteuerung 15 veranlasst dann die Drosselklappe 15 zur Einstellung dieses vorgegebenen Öffnungsgrades. Die dem Brennraum auf diese Weise zugeführte verdichtete und ggf. gedrosselte Frischluft wird über ein Einspritzventil 60 mit Kraftstoff vermischt. Dabei ist gemäß Figur 1 dargestellt, dass der Kraftstoff über das Einspritzventil 60 direkt in den Brennraum eingespritzt wird. Alternativ kann der Kraftstoff auch bereits in die Luftzufuhr 10 stromab oder stromauf der Drosselklappe 15 eingespritzt werden. Dabei wird das Einspritzventil 60 ebenfalls von der Motorsteuerung 20 angesteuert, beispielsweise um ein vorgegebenes Luft-/Kraftstoffgemisch-Verhältnis einzuhalten. Das auf diese Weise gebildete Luft-/Kraftstoffgemisch wird von einer Zündkerze 65 gezündet. Auch die Zündkerze 65 kann von der Motorsteuerung 20 angesteuert werden, beispielsweise um einen geeigneten Zündzeitpunkt zu realisieren. Dieser kann beispielsweise im Hinblick auf eine einzustellende Momentenreserve oder im Hinblick auf das Aufheizen eines ggf. vorhandenen Katalysators im Abgasstrang des Ottomotors 1 vorgegeben sein. Das bei der Verbrennung des Luft-/Kraftstoffgemisches im Brennraum entstehende Abgas wird über ein in Figur 1 nicht dargestelltes Auslassventil in einen Abgasstrang 70 ausgestoßen. Die Strömungsrichtung des Abgases im Abgasstrang 70 ist in Figur 1 ebenfalls durch Pfeile gekennzeichnet. Im Abgasstrang 70 ist gemäß Figur 1 eine Turbine 70 angeordnet, die vom Abgasmassenstrom im Abgasstrang 70 angetrieben wird. Die Turbine 75 treibt ihrerseits über eine Welle 80 den Verdichter 45 zur Verdichtung der dem Ottomotor 1 zuzuführenden Frischluft an. Der Verdichter 45, die Turbine 75 und die Welle 80 bilden in diesem Beispiel einen Abgasturbolader.

Der Doppelpfeil in Figur 1 zwischen der Drosselklappe 15 und der Motorsteuerung 20 deutet an, das auch eine Lagerückmeldung stattfindet, d. h. dass eine Messeinrichtung im Bereich der Drosselklappe 15, beispielsweise in Form eines Potentiometers, die Position der Drosselklappe 15 erfasst und an die Motorsteuerung 20 rückmeldet. Dieser Messwert wird auch als αdk bezeichnet. Die vom Differenzdrucksensor 55 ermittelte Druckdifferenz über dem Luftfilter 5 wird als dplufi bezeichnet. Eine Ansteuerung eines Bypasses um die Turbine 75 des Abgasturboladers ist in Figur 1 aus Gründen der Übersichtlichkeit nicht dargestellt und kann in dem Fachmann bekannter Weise erfolgen.

Um den Verdichter 45 ist ein Bypasskanal 120 mit einem Bypassventil 115 angeordnet, das von der Motorsteuerung 20 angesteuert wird. Das Bypassventil 115 wird auch als Schubumluftventil bezeichnet. Eine Öffnung des Bypassventils 115 zur Vermeidung von Verdichterpumpen setzt normalerweise beim Schließen der Drosselklappe 15 ein. Dabei kann es vorgesehen sein, dass im Falle des Schließens der Drosselklappe bei Erreichen einer vorgegebenen Position αdk0 der Drosselklappe 15, die einen vorgegebenen Öffnungsgrad der Drosselklappe 15 charakterisiert, die Motorsteuerung 20 das Bypassventil 115 zur Öffnung auf einen vorgegebenen Öffnungsgrad ansteuert. Im allgemeinen wird das Schubumluftventil jedoch schlagartig ganz geöffnet, wenn der Sollladedruck, der aus dem Fahrerwunsch berechnet wird, kleiner wird als der Umgebungsdruck. Dabei können unterschiedlichen Positionen der Drosselklappe 15 unterschiedliche Öffnungsgrade des Bypassventils 115 zugeordnet sein. Mit zunehmender Schließung der Drosselklappe 15 wird dabei das Bypassventil 115 weiter geöffnet. Es kann vorgesehen sein, dass das Bypassventil 115 für Positionen αdk größer einem vorgegebenem Schwellwert αdks vollständig geschlossen ist. Für Positionen αdk kleiner dem vorgegebenen Schwellwert αdks nimmt dann der Öffnungsgrad des Bypassventils 115 mit abnehmender Öffnung der Drosselklappe 15 zu. Alternativ kann das Bypassventil 115 bei allen Positionen αdk kleiner dem vorgegebenem Schwellwert αdks vollständig geöffnet werden. Der vorgegebene Schwellwert αdks kann dabei vorzugsweise der vorgegebenen Position αdk0 der Drosselklappe 15 entsprechen. Mit öffnender Ansteuerung des Bypassventils 115 durch die Motorsteuerung 20 ausgehend von seinem geschlossenen Zustand, also bei Erreichen der Position αdks bei einer Reduzierung des Öffnungsgrades der Drosselklappe 15 wird ein Bit B_suv in der Motorsteuerung 20 gesetzt. Bei vollständig geschlossenem Bypassventil 115 ist das Bit B_suv zurückgesetzt.

In Figur 2 ist nun das erfmdungsgemäße Verfahren und die erfindungsgemäße Vorrichtung anhand eines Funktionsdiagramms einer Detektionseinheit 140 näher beschrieben. Dieses Funktionsdiagramm kann software- und/oder hardwaremäßig in der Motorsteuerung 20 angeordnet bzw. implementiert sein. Dabei wird die vom Differenzdrucksensor 55 gemessene Druckdifferenz dplufi einem ersten Vergleichsglied 25 und einem zweiten Vergleichsglied 30 zugeführt. Liegt die Druckdifferenz dplufi oberhalb eines vorgegebenen oberen Schwellwertes So, dann erzeugt das erste Vergleichsglied 25 eine Flanke, die von einem nachfolgenden ersten Flankendetektor 35 detektiert wird. Ein anschließend angeordneter erster Zähler 125 zählt die vom ersten Flankendetektor 35 detektierten Flanken am Ausgang des ersten Vergleichgliedes 25. Dabei kann der erste Zähler 125 beispielsweise als Additionsglied ausgebildet sein, dessen Summe ausgehend von einem Ausgangswert mit jeder vom ersten Flankendetektor 35 detektierten Flanke um Eins erhöht wird. In einem dritten Vergleichsglied wird geprüft, ob die gerade anliegende Summe der detektierten Flanken am Ausgang des ersten Zählers 125 einen vorgegebenen Grenzwert Sz überschreitet. Ist dies der Fall, so wird der Ausgang des dritten Vergleichsgliedes 50 gesetzt. Dieser Ausgang wird als Eingangsgröße einem UND-Glied 90 zugeführt. Die Druckdifferenz dplufi wird außerdem einem zweiten Vergleichsglied 30 zugeführt, an dessen Ausgang eine Flanke erzeugt wird, wenn die Druckdifferenz dplufi einen vorgegebenen unteren Schwellwert Su unterschreitet. Die Flanken am Ausgang des zweiten Vergleichsgliedes 30 werden jeweils von einem nachfolgenden zweiten Flankendetektor 40 detektiert. Dem zweiten Flankendetektor 40 folgt ein zweiter Zähler 130 nach, der wie der erste Zähler 125 ausgebildet sein kann und die vom zweiten Flankendetektor 40 detektierten Flanken zählt bzw. aufsummiert. Die gerade am Ausgang des zweiten Zählers 130 anliegende Summe bzw. Anzahl der vom zweiten Flankendetektor 40 detektierten Flanken wird einem vierten Vergleichsglied 85 zugeführt und dort mit dem vorgegebenen Grenzwert Sz verglichen. Überschreitet die Anzahl der vom zweiten Flankendetektor 40 detektierten Flanken den vorgegebenen Grenzwert Sz, so wird der Ausgang des vierten Vergleichsgliedes 85 gesetzt. Dieser Ausgang ist als weitere Eingangsgröße des UND-Gliedes 90 vorgesehen.

Der Detektionseinheit 140 ist außerdem das Bit B_suv zugeführt. Dieses ist zum einen als Eingangsgröße einem Zeitglied 135 zugeführt, das beispielsweise als Monoflop ausgebildet sein kann und eine vorgegebene Zeitkonstante T0 aufweist. Mit dem Setzen des Bit B_suv, also mit dem Öffnen des Bypassventils 115 aus dem vollständig geschlossenem Zustand, wird das Zeitglied 135 gestartet und der Ausgang des Zeitgliedes 135 vom zurückgesetzten Zustand in den gesetzten Zustand gebracht. Nach Ablauf der vorgegebenen Zeitkonstante T0 wird der Ausgang des Zeitgliedes 135 wieder zurückgesetzt. Der Ausgang des Zeitgliedes 135 wird als dritte Eingangsgröße dem UND-Glied 90 zugeführt. Das Bit B_suv wird außerdem einem dritten Flankendetektor 95 zugeführt. Detektiert der dritte Flankendetektor 95 eine steigende Flanke, wie sie beim Setzen des Bits B_suv auftritt, so triggert er einen Rücksetzeingang des ersten Zählers 125 und einen Rücksetzeingang des zweiten Zählers 130 auf jeweils den Ausgangswert Null, von dem aus dann die ab dem Setzen des Bits B suv auftretenden Flanken des ersten Flankendetektors 35 bzw. des zweiten Flankendetektors 40 addiert werden. Sind alle drei Eingänge des UND-Gliedes 90 gesetzt, so wird ein Fehlerbit E_suv am Ausgang des UND-Gliedes 90 ebenfalls gesetzt und ein Fehler des Bypassventils 115 angezeigt, d. h. das Bypassventil 115 öffnet nicht in der gewünschten Weise. Das dadurch verursachte Verdichterpumpen wurde dadurch erkannt, das innerhalb der durch die Zeitkonstante T0 vorgegebenen Zeit die Anzahl der Überschreitungen des oberen Schwellwertes So und die Anzahl der Unterschreitungen des unteren Schwellwertes Su durch die Druckdifferenz dplufi jeweils größer als der vorgegebene Grenzwert Sz ist. Dabei kann der obere Schwellwert So, der untere Schwellwert Su, der Grenzwert Sz und die Zeitkonstante T0 beispielsweise auf einem Prüfstand derart appliziert werden, dass das Verdichterpumpen in der beschriebenen Weise eindeutig und zuverlässig erkannt wird, so dass bei Auftreten des Verdichterpumpens das Fehlerbit E_suv gesetzt wird. Bleibt einer der Ausgänge des dritten Vergleichsgliedes 50 und des vierten Vergleichsgliedes 85 nach Ablauf der durch die Zeitkonstante T0 vorgegebenen Zeit zurückgesetzt, so wird kein Verdichterpumpen erkannt und der Ausgang des UND-Gliedes 90 und damit das Fehlerbit E_suv bleibt zurückgesetzt, so dass kein Fehler des Bypassventils 115 erkannt wird. Das Bypassventil 115 arbeitet dann fehlerfrei.

Durch das Zeitglied 135 und dessen vorgegebene Zeitkonstante T0 wird die Auswertung der Anzahl der Schwellenüberschreitungen des oberen Schwellwertes So und des unteren Schwellwertes Su auf die durch die vorgegebene Zeitkonstante T0 vorgegebene Zeit beschränkt. Mit dem Setzen des Ausgangs des UND-Gliedes 90 und damit des Fehlerbits E_suv kann eine Warnlampe oder ein Warnsignal aktiviert und ggf. eine Notlaufmaßnahme der Brennkraftmaschine 1 eingeleitet werden, in letzter Konsequenz kann die Brennkraftmaschine 1 auch abgeschaltet werden, was im allgemeinen jedoch nicht geschieht, weil ein nicht öffnendes Schubumluftventil nur akustisch störend wirkt (das Pumpen verursacht hörbare Geräusche) und die Achsbelastung des Verdichters erhöht, was dieser im allgemeinen verträgt.

Liegt innerhalb der durch die vorgegebene Zeitkonstante T0 vorgegebenen Zeit sowohl eine Anzahl der Überschreitungen des vorgegebenen oberen Schwellwertes So durch die Druckdifferenz dplufi als auch eine Anzahl der Unterschreitungen des vorgegebenen unteren Schwellwertes Su durch die Druckdifferenz dplufi vor, die den vorgegebenen Grenzwert Sz überschreitet, so wird auf diese Weise erkannt, dass die Druckdifferenz dplufi pulsiert, was unerwünscht ist, und das Fehlerbit E_suv gesetzt. Dabei ist der vorgegebene obere Schwellwert So größer zu wählen als der vorgegebene untere Schwellwert Su.

Wenn diese Druckdifferenz dplufi zu dem Zeitpunkt, zu dem das Bypassventil 115 öffnen soll, in der beschriebenen Weise unerwünscht pulsiert, dann liegt ein Fehler des Bypassventils 115 derart vor, dass das Bypassventil 115 nicht wie gewünscht öffnet und es deshalb zum Verdichterpumpen d. h. zu der unerwünschten pulsierenden Druckdifferenz kommt. Mit dem beschriebenen erfindungsgemäßen Detektionsverfahren gemäß der erfindungsgemäßen Detektionseinheit 140 kann innerhalb der durch die Zeitkonstante T0 vorgegebenen Zeit nach Setzen des Bits B_suv, also nach dem öffnenden Ansteuern des Bypassventils 115 durch die Motorsteuerung 20 festgestellt werden, ob dieses unerwünschte Verdichterpumpen stattfmdet, d. h. das Bypassventil 115 fehlerhaft nicht wie gewünscht, also entweder gar nicht oder nicht genügend öffnet. Somit wird innerhalb der durch die vorgegebene Zeitkonstante T0 bestimmten Zeit und damit zumindest zu einem Zeitpunkt, zu dem das Bypassventil 115 öffnen soll, d. h. geöffnet sein soll, eine unerwünscht pulsierende Druckdifferenz über dem Luftfilter 5 aufgrund eines unerwünschten Verdichterpumpens und damit ein fehlerhaft nicht wie gewünscht geöffnetes Bypassventil 115 detektiert. Wie beschrieben soll das Bypassventil 115 ausgehend von der vollständig geschlossenen Position geöffnet werden, wenn bei der Reduzierung des Öffnungsgrades der Drosselklappe 14 der vorgegebene Schwellwert αdks erreicht wird. Alternativ kann statt des durch den vorgegebenen Schwellwert αdks vorgegebenen Öffnungsgrades der Drosselklappe 15 ein vorgegebener Luftmassenstrom verwendet werden, d. h. das Bypassventil 115 soll geöffnet werden, wenn bei der Reduktion des Öffnungsgrades der Drosselklappe 15 der vorgegebene Luftmassenstrom erreicht wird. Der Luftmassenstrom kann dabei, sofern er nicht mittels eines Luftmassenmessers gemessen wird, in dem Fachmann bekannter Weise aus Betriebsgrößen der Brennkraftmaschine 1 beispielsweise ausgehend von dem Saugrohrdruck modelliert werden, wobei der Saugrohrdruck durch einen in Figur 1 der Übersichtlichkeit halber nicht dargestellten Saugrohrdrucksensor, der zwischen der Drosselklappe 15 und dem Zylinderblock 110 in der Luftzufuhr 10 angeordnet ist, gemessen werden kann.

Der Differenzdruck dplufi kann statt über dem Luftfilter 5 auch über eine andere Komponente der Luftzufuhr 10, beispielsweise über einem Ladeluftkühler, erfasst werden.

## Patentansprüche

1. Verfahren zum Betreiben einer Brennkraftmaschine (1), **dadurch gekennzeichnet, dass** eine Druckdifferenz über einer Komponente (5) einer Luftzufuhr (10) zur Brennkraftmaschine (1) ermittelt wird und dass bei Detektion einer pulsierenden Druckdifferenz ein Fehler erkannt wird, dass die der Brennkraftmaschine (1) über die Luftzufuhr (10) zugeführte Luft von einem Verdichter (45) verdichtet wird, wobei ein Bypassventil (115) in einem Bypasskanal (120) zum Verdichter (45) zur Vermeidung von Verdichterpumpen angesteuert wird, dass wenn zu einem Zeitpunkt, zu dem das Bypassventil (115) öffnen soll, eine pulsierende Druckdifferenz über der Komponente (5) detektiert wird, ein Fehler des Bypassventils (115) detektiert wird, und dass als Komponente ein Luftfilter oder ein Ladeluftkühler gewählt wird.

2. Verfahren nach Anspruch 1, **dadurch gekennzeichnet, dass** das Bypassventil (115) zur Öffnung angesteuert wird, wenn die Luftzufuhr (10) zur Brennkraftmaschine (1) auf mindestens einen vorgegebenen Wert gedrosselt wird.

3. Verfahren nach Anspruch 2, **dadurch gekennzeichnet, dass** der vorgegebene Wert ein vorgegebener Luftmassenstrom oder ein vorgegebener Öffnungsgrad eines die Luftzufuhr (10) zur Brennkraftmaschine (1) einstellenden Stellgliedes (15), insbesondere einer Drosselklappe, in der Luftzufuhr (10) ist.

4. Verfahren nach einem der vorherigen Ansprüche, **dadurch gekennzeichnet, dass** die Druckdifferenz über der Komponente (5) der Luftzufuhr (10) mit einem oberen und einem unteren Schwellwert verglichen wird und dass dann, wenn die Anzahl der Überschreitungen des oberen und des unteren Schwellwertes innerhalb einer vorgegebenen Zeit jeweils einen vorgegebenen Wert überschreitet, der Fehler erkannt wird.

5. Verfahren nach Anspruch 4, **dadurch gekennzeichnet, dass** mit Beginn der öffnenden Ansteuerung des Bypassventils (115) Zähler (125, 130) zurückgesetzt werden, die die Anzahl der Überschreitungen des oberen und des unteren Schwellwertes zählen, und ein Zeitglied (135) zur Einstellung der vorgegebenen Zeit gestartet wird.

6. Vorrichtung (20) zum Betreiben einer Brennkraftmaschine (1), der über eine Luftzufuhr (10) von einem Verdichter (45) verdichtete Luft zugeführt wird und bei der ein Bypassventil (115) in einem Bypasskanal (120) zum Verdichter (45) zur Vermeidung von Verdichterpumpen angesteuert wird, **dadurch gekennzeichnet, dass** die Vorrichtung (20) Detektionsmittel (140) umfasst, die bei Detektion einer von einem Differenzdrucksensor (55) zugeführten pulsierenden Druckdifferenz über einer als Luftfilter oder Ladeluftkühler ausgebildeten Komponente (5) der Luftzufuhr (10) zur Brennkraftmaschine (1) einen Fehler erkennen und dass die Detektionsmittel (140) derart ausgebildet sind, dass sie wenn sie zu einem Zeitpunkt, zu dem das Bypassventil (115) öffnen soll, eine pulsierende Druckdifferenz über der Komponente (5) detektieren, einen Fehler des Bypassventils (115) detektieren.

## Claims

1. Method for operating an internal combustion engine (1), **characterized in that** a pressure difference across a component (5) of an air supply (10) is identified with respect to the internal combustion engine (1), **in that**, when a pulsating pressure difference is detected, a fault is detected, and **in that** the air which is fed to the internal combustion engine (1) via the air supply (10) is compressed by a compressor (45), wherein a bypass valve (115) is actuated in a bypass duct (120) for the compressor (45) in order to avoid pumping of the compressor, **in that**, if a pulsating pressure difference is detected across the component (5) at a time at which the bypass valve (115) is intended to open, a fault of the bypass valve (115) is detected, and **in that** an air filter or a charge air cooler is selected as the component.

2. Method according to Claim 1, **characterized in that** the bypass valve (115) is actuated in order to open it if the air supply (10) to the internal combustion engine (1) is throttled to at least a predefined value.

3. Method according to Claim 2, **characterized in that** the predefined value is a predefined air mass flow or a predefined degree of opening of an actuator element (15), in particular of a throttle valve, which adjusts the air supply (10) to the internal combustion engine (1) and is located in the air supply (10).

4. Method according to one of the preceding claims, **characterized in that** the pressure difference across the component (5) of the air supply (10) is compared with an upper and a lower threshold value, and **in that**, if the number of occasions on which the upper and the lower threshold value are exceeded within a predefined time respectively exceeds a predefined value, the fault is detected.

5. Method according to Claim 4, **characterized in that**, at the start of the opening actuation of the bypass valve (115), counters (125, 130) which count the number of occasions on which the upper and lower threshold values are exceeded are reset, and a timing element (135) for setting the predefined time is started.

6. Device (20) for operating an internal combustion engine (1) to which air which is compressed by a compressor (45) is fed via an air supply (10) and in which a bypass valve (115) in a bypass duct (120) to the compressor (45) is actuated in order to avoid pumping of the compressor, **characterized in that** the device (20) comprises detection means (140) which detect a fault when a pulsating pressure difference, supplied by a differential pressure sensor (55), is detected across a component (5), embodied as an air filter or charge air cooler, of the air supply (10) with respect to the internal combustion engine (1), and **in that** the detection means (140) are embodied in such a way that, if they detect a pulsating pressure difference across the component (5) at a time at which the bypass valve (115) is intended to open, they detect a fault of the bypass valve (115).

## Revendications

1. Procédé pour le fonctionnement d'un moteur à combustion interne (1), **caractérisé en ce que** l'on détermine une différence de pression sur un composant (5) d'une arrivée d'air (10) au moteur à combustion interne (1) et **en ce que** l'on reconnaît un défaut lors de la détection d'une différence de pression pulsée, **en ce que** l'on comprime au moyen d'un compresseur (45) l'air envoyé au moteur à combustion interne (1) par l'arrivée d'air (10), une soupape de dérivation (115) dans un canal de dérivation (120) sur le compresseur (45) étant commandée pour éviter le pompage du compresseur, **en ce que**, lorsque l'on détecte une différence de pression pulsée sur le composant (5) à un instant auquel la soupape de dérivation (115) doit s'ouvrir, on détecte un défaut de la soupape de dérivation (115), et **en ce que** l'on choisit comme composant un filtre à air ou un refroidisseur d'air d'admission.

2. Procédé selon la revendication 1, **caractérisé en ce que** l'on commande la soupape de dérivation (115) pour l'ouvrir lorsque l'arrivée d'air (10) vers le moteur à combustion interne (1) est étranglée à au moins une valeur prédéterminée.

3. Procédé selon la revendication 2, **caractérisé en ce que** la valeur prédéterminée est un flux massique d'air prédéterminé ou un degré d'ouverture prédéterminé d'un organe de réglage (15) réglant l'arrivée d'air (15) vers le moteur à combustion interne (1), en particulier un papillon des gaz, dans l'arrivée d'air (10).

4. Procédé selon l'une quelconque des revendications précédentes, **caractérisé en ce que** l'on compare la différence de pression sur le composant (5) de l'arrivée d'air (10) avec une valeur de seuil supérieure et une valeur de seuil inférieure et **en ce que** l'on reconnaît le défaut lorsque le nombre de dépassements des valeurs de seuil supérieure et inférieure à l'intérieur d'un temps prédéterminé dépasse respectivement une valeur prédéterminée.

5. Procédé selon la revendication 4, **caractérisé en ce que**, au commencement de la commande d'ouverture de la soupape de dérivation (115), on remet à zéro des compteurs (125, 130), qui comptent le nombre de dépassements des valeurs de seuil supérieure et inférieure, et on fait démarrer un système temporisé (135) pour régler le temps prédéterminé.

6. Dispositif (20) pour le fonctionnement d'un moteur à combustion interne (1), auquel de l'air comprimé par un compresseur (45) est envoyé par une arrivée d'air (10) et dans lequel une soupape de dérivation (115) dans un canal de dérivation (120) sur le compresseur (45) est commandée pour éviter le pompage du compresseur, **caractérisé en ce que** le dispositif (20) comprend des moyens de détection (140), qui reconnaissent un défaut lors de la détection d'une différence de pression pulsée fournie par un capteur de différence de pression (55) sur un composant (5), réalisé en forme de filtre à air ou de refroidisseur d'air d'admission, de l'arrivée d'air (10) vers le moteur à combustion interne (1) et **en ce que** les moyens de détection (140) sont réalisés de telle manière qu'ils détectent un défaut de la soupape de dérivation (115) lorsqu'ils détectent une différence de pression pulsée sur le composant (5) à un instant où la soupape de dérivation (115) doit s'ouvrir.
